# EUROPEAN PATENT APPLICATION

(11) **EP 4 032 605 A1**
(43) Date of publication of application: **27.07.2022**
(21) Application number: 22152550.4
(22) Date of filing: 20.01.2022
(51) Int. Cl.: B01D 63/02, B01D 63/08

(54) **MEMBRANE FILTER WITH SIDE ACCESS**

(30) Priority: 26.01.2021 IT 202100001376
(71) Applicant: Serenambiente S.r.l., 00195 Roma RM (IT)
(72) Inventor: Cendron, Nicola, 00195 Roma RM (IT)
(74) Representative: Perani & Partners S.p.A.

(57) **Abstract**

Membrane filter (1) comprising:
- a tank (2) defined at least by a bottom wall (21) and one or more side walls (22), arranged transversely with respect to the bottom wall (21), said tank (2) being configured to contain a fluid;
- a membrane module (3) placed inside the tank (2) and configured to be immersed in a fluid when the tank (2) contains a fluid, said membrane module (3) comprising an array of membrane elements (31) configured to filter the fluid contained in the tank (2); said tank (2) having an opening (4) for accessing inside the tank (2) and/or the membrane module (3); said opening (4) is obtained on one of the side walls (22), said membrane module (3) being configured to translate at least in part horizontally with respect to said tank (2) to be extracted and/or inserted through said opening (4).

## Description

### Technical field

The present invention relates to a membrane filter for the solid/liquid separation, or in general the separation, from a liquid, of substances with a molecular weight above a certain cut-off typical of the membrane. The membrane filter according to the present invention is used, for example, in wastewater purification, for industrial, naval or other purposes.

### Description of the prior art

Membrane reactors for liquid/solid separation are known in the state of the art.

These membrane reactors usually comprise a tank into which a fluid to be treated is made flow, for example sewage containing residues of contaminants or sludge.

Inside the aforementioned tank can be found membranes configured to interact, chemically and mechanically, with the fluid, thus facilitating a selective flow of species through them. In particular, these membranes usually allow water and only certain components within the fluid to pass through. Typically, indeed, these membranes are permeable to liquids while retaining solids or substances with a molecular weight above the membrane cut-off.

Two types of membrane generally used for the above purposes are known.

According to a first type, the membranes are placed inside pressurised containers (known in technical jargon as "vessels") into which the liquid is pumped. According to this type of membrane, known as a pressurised membrane, the fluid referred to as permeate is extracted due to the pressure exerted on the membrane.

The use of membranes immersed in a generally open top tank from which the fluid to be treated is introduced is also known. According to this type, the permeate is extracted under vacuum through membranes. This second type of membrane, known in the art as a submerged membrane, is the one especially referred to in the present invention.

In particular, a suction pump depresses the membranes so that the incoming fluid to be treated flows through these membranes from the outside to the inside of the membrane, resulting in a clean outgoing fluid, since impurities, suspended solids and colloids are retained outside the membranes.

During operation, i.e. during the filtration or permeation, there is a continuous supply of air to the bottom of the tank, below the membranes, from bottom diffusers which blow coarse- and fine-bubble air. These diffusers generate an ascending flow of the active sludge through the membrane elements, allowing the surface of the membrane itself to remain clean and permeable for a long time during suction.

However, over time, the membranes may require chemical cleaning, which can be carried out directly in the tank (Maintenance Cleaning), or intensive chemical cleaning (Recovery Cleaning), carried out by removing the membranes from the tank. In fact, as the membranes separate contaminants of all species (provided they are larger than their porosity), over time they become irreversibly saturated and therefore require periodic maintenance by an operator who cleans and/or replaces them. In particular, with regard to membranes of the type submerged in tanks, for maintenance purposes the operator accesses them from the top of the tank, removing them and subsequently reinserting them from above.

### Problems of the prior art

Disadvantageously, access to the membranes is difficult as the operator must be above the tank in order to extract them. Furthermore, in order to clean or replace membranes (for example), there must be a minimum amount of free space above the tank to allow the operator to remove them and then place them on a level area, often with a lifting device. Consequently, in all situations where, for reasons of space, it is difficult to install and/or extract the membranes submerged in the tank, this type of membrane cannot be used.

### SUMMARY OF THE INVENTION

In this context, the technical task underlying the present invention is to propose a membrane filter which overcomes the drawbacks of the prior art mentioned above.

In particular, it is the aim of the present invention to provide a membrane filter that allows an operator to have easy access to the membranes, thereby improving cleaning and maintenance operations.

The technical task mentioned and the aims stated are substantially achieved by means of a membrane filter comprising the technical features set out in one or more of the appended claims.

### Advantages of the invention

In particular, the membrane filter according to the present invention solves the technical problem in that it provides for access to the tank and/or the membranes through an opening at a side wall of the tank. Furthermore, the membranes are grouped together in a module that can be moved at least in part horizontally with respect to the tank, in order to be extracted and/or inserted through the opening. This makes maintenance easier for the user.

### BRIEF DESCRIPTION OF THE DRA WINGS

The features and advantages of the present invention will become apparent from the following detailed description of a possible practical embodiment thereof, illustrated by way of example only in the accompanying drawings, wherein:

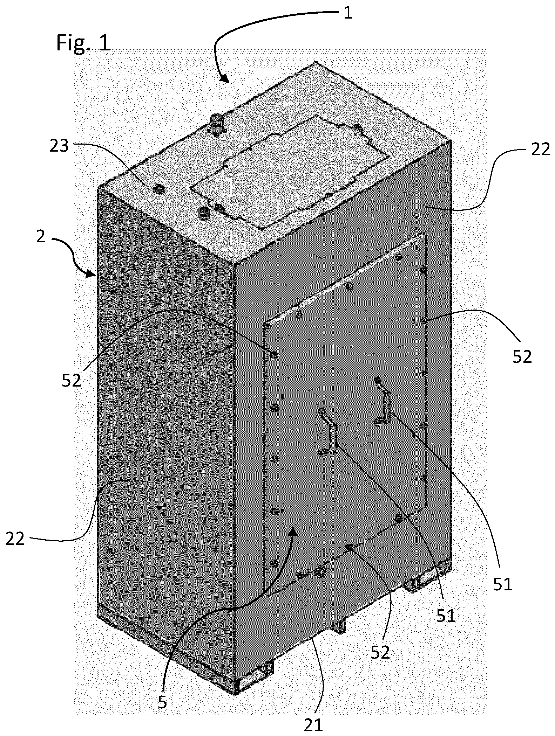

- Figure 1 shows a front perspective view of a membrane filter according to the present invention in a first configuration;

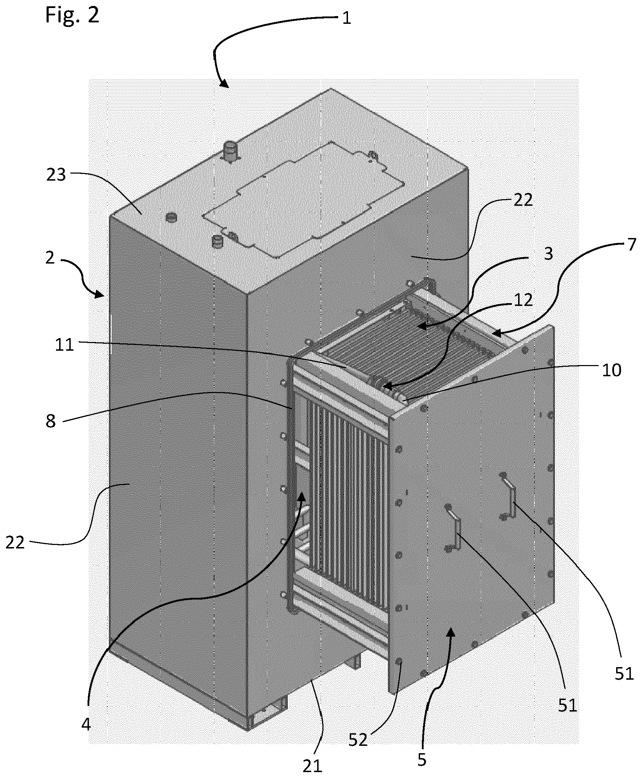

- Figure 2 shows a front perspective view of the filter of Figure 1 in a second configuration;

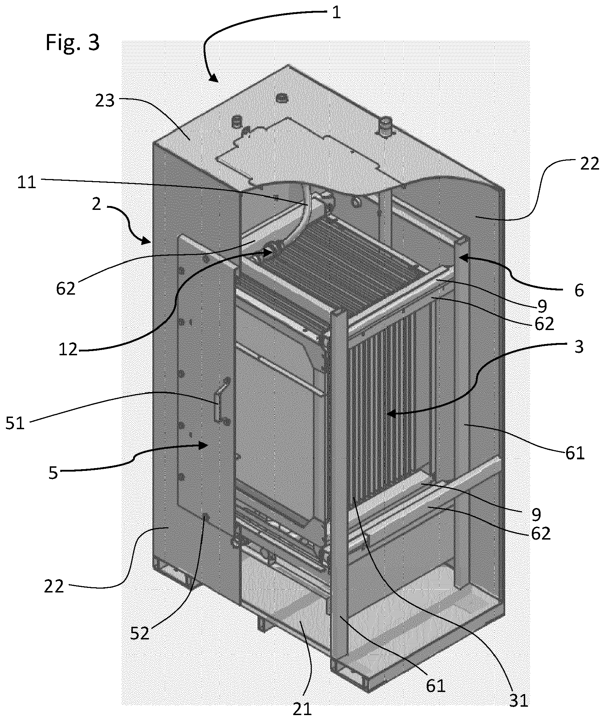

- Figure 3 shows a partially sectioned front perspective view of the filter of Figure 1;

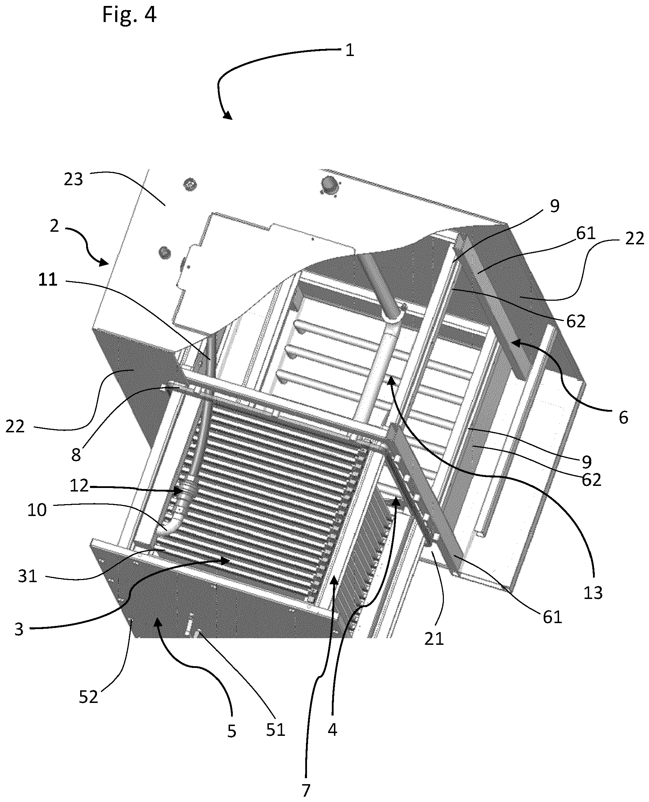

- Figure 4 shows a top perspective view of a section of the filter of Figures 1 and 2.

### DETAILED DESCRIPTION

Even if not explicitly highlighted, the individual features described with reference to the specific embodiments shall be understood as accessory to and/or interchangeable with other features described with reference to other embodiments.

With reference to the accompanying figures, the present invention relates to a membrane filter, marked with the number 1.

The membrane filter 1 according to the present invention includes a tank 2. The tank 2 is defined at least by a bottom wall 21 and one or more side walls 22 arranged transversely with respect to the bottom wall 21. For example, a prism shaped tank has several side walls 22. Preferably, the tank 2 according to the present invention is prism shaped with a rectangular base and has four side walls 22. Alternatively, the tank 2 can be cylindrical in shape and in this case there is only one side wall 22 in the form of a circular ring.

Preferably, the tank 2 has a top wall 23 facing the bottom wall 21. In other words, the walls of the tank 2 preferably define an enclosed space.

It should be noted that the tank 2 is configured to contain a fluid, in particular a fluid to be treated. This fluid is poured into the tank 2 through conduits (not illustrated).

The membrane filter 1 comprises a membrane module 3 placed inside the tank 2. The membrane module 3 is configured to be immersed in a fluid, whenever the tank 2 contains a fluid. This membrane module 3 is configured to allow a fluid to flow through it. In particular, the membrane module 3 is configured to interact, chemically or mechanically, with a fluid to be treated in order to allow selective passage of species contained within the fluid.

The membrane filter 1 is preferably a filter of the type known as a submerged membrane filter.

In greater detail, the membrane module 3 comprises an array of membrane elements 31. In accordance with the present invention, the membrane elements 31 are commonly known as flat sheet of hollow fibre elements. Each membrane element 31 is configured separately to allow a fluid to flow through it so as to filter the fluid contained in the tank 2. The membrane module 3 is then configured to interact with a fluid flowing into each membrane element 31 to produce a fluid flowing out of each membrane element 31.

In greater detail, the membrane filter 1 comprises air diffusers 13 inserted into the tank 2 and configured to aerate the fluid.

In particular, when the tank 2 contains the fluid to be treated, and the membrane module 3 and the air diffusers 13 are immersed in the fluid, the air diffusers 13 blow air into the fluid, thereby generating an ascending fluid current which in turn generates, on the surface of each membrane element 31, shear forces capable of keeping each membrane element 31 cleaner for longer during permeation by depression. This fluid flowing into a membrane element 31 passes through the membrane element 31 and is filtered through the membrane element 31. Each membrane element 31 is in fluid communication with a manifold 10 configured to collect clean fluid flowing out of each membrane element 31.

Preferably, the membrane elements 31 are hollow fibre membrane elements.

The tank 2 has an opening 4 for accessing the inner part of the tank 2 and/or the membrane module 3.

In particular, in accordance with the present invention, this opening 4 is formed on one of the side walls 22.

It is worth noting that the membrane module 3 is configured to translate at least in part horizontally with respect to the tank 2 in order to be extracted and/or inserted through the opening 4.

The membrane filter 1 comprises one or more guides 9 placed inside the tank 2 and integral with the tank 2. In particular, the membrane module 3 is connected to one or more guides 9 to be inserted and/or extracted from the opening 4. Preferably, the membrane filter 1 comprises four guides 9, positioned on two opposite side walls 22, or on a frame 6, integral with the tank 2, about which more details will be provided below. Specifically, the guides 9 are positioned in pairs on the two side walls 22 adjacent to the wall on which the opening 4 is obtained. Alternatively, the guides 9 are positioned two by two on horizontal crossbars 62 of the frame 6, more details of which will be provided below. The guides 9 of the same side wall 22 or of the same horizontal crossbar 62 are also spaced apart.

In greater detail, the membrane filter 1 preferably comprises a drawer 7 inserted into the guides 9 to be slidable with respect to the tank 2.

In particular, the drawer 7 is removable and/or insertable from/into the tank 2.

Preferably, the drawer 7 is prism shaped with a rectangular base in accordance with the shape of the tank 2.

Preferably, the air diffusers 13 are integral with the tank 2. In this manner, it is possible to extract the drawer 7 independently of the air diffusers 13.

The membrane module 3 is placed in the drawer 7 and is constrained to the drawer 7. Advantageously, by sliding the drawer 7 the membrane module 3 can be inserted into the tank 2 or extracted from the tank 2.

Preferably, the drawer 7 comprises wheels. These wheels are made of plastic, for example. The wheels are inserted into the guides 9 to slide the drawer 7.

Preferably, each guide 9 is configured to house at least one wheel.

In greater detail, the membrane filter 1 comprises the aforementioned frame 6. The frame 6 is configured to support the drawer 7. According to this embodiment, the drawer 7 is slidably connected to the frame 6. The frame 6 is inside the tank 2 and is preferably integral with the bottom wall 21 and/or the side walls 22. Preferably, the frame 6 comprises vertical uprights 61 and/or the aforementioned horizontal crossbars 62. The vertical uprights 61 and/or the horizontal crossbars 62 are fixed to the tank 2 and aim to reinforce the tank 2 internally. Particularly, preferably the frame 6 comprises four vertical uprights 61 spaced apart and connected by four horizontal crossbars 62. Preferably, the drawer 7 is connected to the frame 7 at the vertical edges. Preferably, the guides 9 are placed on the frame 6, in particular on the horizontal crossbars 62.

Preferably, the membrane filter 1 comprises an opening door 5 placed at the side wall 22 on which the opening 4 is obtained. In particular, the door 5 covers the opening 4. The door 5 preferably comprises one or more handles 51 to facilitate opening of the door 5 by an operator.

It should be noted that the aforementioned drawer 7 is preferably fixed to the door 5. Advantageously, moving the door 5 causes the drawer 7 to be moved. Preferably, the door 5 can be opened by means of a horizontal translation. In particular, pulling the door 5 removes the drawer 7 from the tank 2; conversely, pushing the door 5 inserts the drawer 7 into the tank 2.

The membrane filter 1 comprises a gasket 8. According to one embodiment, this gasket 8 is placed on the tank 2, preferably on the side wall 22 on which the opening 4 is obtained. According to this embodiment, the gasket 8 surrounds the opening 4 and is configured to abut against the door 5. In accordance with a second embodiment, alternative to the previous one, the gasket 8 is placed on the door 5. According to this embodiment, the gasket 8 surrounds an inner wall of the door 5 and is configured to abut against the opening 4 when the door 5 is closed.

Preferably, the membrane filter 1 further comprises closing means 52. In particular, the closing means 52 are configured to close the door 5 on the tank 2 in such a way as to make the door 5 adhere to the gasket 8 and thus ensure the seal. These closing means 52 preferably take the form of screws.

The membrane filter 1 comprises the aforementioned manifold 10. This manifold 10 is configured to channel the filtered fluid exiting the membrane elements 31 out of the tank 2. Each membrane element 31 is in fact placed in fluid communication with the manifold 10. The manifold 10 is also in fluid communication with a conduit 11 exiting the tank 2. This conduit 11 is preferably flexible to allow movement of the drawer 7 without the need to uninstall the conduit 11. Preferably, each membrane element 31 is connected to the manifold 10 via gasketed insert connections.

Preferably, the manifold 10 is connected to the conduit 11 by means of a quick-coupling connector 12. Advantageously, connection of the manifold to the conduit 11 is facilitated.

## Claims

1. Membrane filter (1) comprising:
- a tank (2) defined at least by a bottom wall (21) and one or more side walls (22), arranged transversely with respect to the bottom wall (21), said tank (2) being configured to contain a fluid;
- a membrane module (3) placed inside the tank (2) and configured to be immersed in a fluid when the tank (2) contains a fluid, said membrane module (3) comprising an array of membrane elements (31) configured to filter the fluid contained in the tank (2); said tank (2) having an opening (4) for accessing inside the tank (2) and/or the membrane module (3);
**characterized in that**
said opening (4) is obtained on one of the side walls (22), said membrane module (3) being configured to translate at least in part horizontally with respect to said tank (2) to be extracted and/or inserted through said opening (4).

2. Membrane filter (1) according to the preceding claim, comprising one or more guides (9) placed inside the tank (2) and integral with the tank (2), said membrane module (3) being associated with said one or more guides (9) to be inserted and/or extracted from said opening (4).

3. Membrane filter (1) according to the preceding claim, comprising a drawer (7) inserted into the one or more guides (9) to be slidable with respect to the tank (2), said membrane module (3) being placed in the drawer (7) and constrained to the drawer.

4. Membrane filter (1) according to the preceding claim, wherein the drawer (7) comprises wheels inserted in the one or more guides (9) for sliding the drawer (7).

5. Membrane filter (1) according to any one of the preceding claims, comprising an opening door (5) placed at the side wall (22) on which said opening (4) is obtained to cover said opening (4).

6. Membrane filter (1) according to claim 3 or 4 and 5, wherein said door (5) is fixed to the drawer (7).

7. Membrane filter (1) according to the preceding claim, comprising a gasket (8), said gasket (8) being placed alternatively
- on the side wall (22) of the tank (2) on which the opening (4) is obtained, said gasket (8) surrounding said opening (4) and being configured to abut against the door (5); or
- on the door (5) surrounding an inner wall of the door (5), said gasket (8) being configured to come into contact with the opening (4).

8. Membrane filter (1) according to the preceding claim, comprising closing means (52) configured to close the door (5) on the tank (2) to make the door (5) adhere to the gasket (8).

9. Membrane filter (1) according to any one of the preceding claims, comprising air diffusers (13) configured to aerate the fluid, said air diffusers being inserted in the tank (2) and integral with the tank (2).

10. Membrane filter (1) according to any one of the preceding claims, comprising a manifold (10) configured to flow the filtered fluid out of the tank (2), said manifold (10) being in fluid communication with a conduit (11) exiting the tank (2) and connected to the conduit (11) through a quick-coupling connector (12).
